# EUROPEAN PATENT APPLICATION

(11) **EP 1 653 749 A1**
(43) Date of publication of application: **03.05.2006**
(21) Application number: 04025773.5
(22) Date of filing: 29.10.2004
(51) Int. Cl.: H04N 13/00, H04N 5/74, G02F 1/13357, G03B 21/56, G02B 6/00

(54) **Image generating and projecting arrangement**

(71) Applicant: Sony Deutschland GmbH, 50829 Köln (DE)
(72) Inventor: Zoidis, Evangelos, Hedelfinger Strasse 61 70327 Stuttgart (DE)
(74) Representative: Müller - Hoffmann & Partner

(57) **Abstract**

An image generating and projecting system (1) is suggested which is uses s polarized and p polarized light in order to generate and display respective partial images (Is, Ip) and/or which comprises a plurality of display screens (S1, ..., S5) and/or which comprises at least one sensing means (B) and which is at the same time adapted in order to display data stemming from sensing results of said sensing means (B).

## Description

The present invention relates to an image generating and projecting arrangement.

Besides the need to compactify and miniaturize image generating and projecting arrangements in order to make them suitable for an incorporation into e.g. modern electronic customer devices a need arises for realizing an enhancement in image brightness, colour saturation, as well as image resolution. In common image generating and projecting systems however it is not possible to realize at the same time a compact and miniaturized structure having a high degree of image resolution, image brightness, as well as colour saturation.

It is therefore an object of the present invention to provide image generating and projecting arrangements which can have a particular compactified and miniaturized structure and at the same time a comparable increased degree of image resolution, image brightness, and/or colour saturation.

The object is achieved according to the present invention by image generating and projecting arrangements according to the feature combinations of independent claims 1, 2, 3, 8, and 18. Preferred embodiments of the arrangements according to the present invention are within the scope of respective dependent sub-claims.

### First to Third solutions

Image generating and projecting arrangements according to a first, a second, and a third solution of the object underlying the present invention are based on almost identical concepts with respect to the structure.

According to these solution the inventive image generating and projecting arrangement comprises a light generating/receiving section, an image generating section, and an optical projection section.

Said light generating/receiving section is adapted and/or arranged in order to generate primary illumination light which comprises a first or s polarized primary illumination light component and a second or p polarized primary illumination light component of primary illumination light as light of a first and a second partial image of an image to be generated, projected and to be displayed. Said image generating section or image generation section is adapted and/or arranged in order to receive said first or s polarized primary illumination light component and said second or p polarized primary illumination light component and in order to generate said first and said second partial images based on said first or s polarized primary illumination light component and said second or p polarized primary illumination light component of said primary illumination light, respectively, and in order to provide or s polarised secondary illumination light component and a second or p polarized secondary illumination light component of secondary illumination light, respectively as light of said first and said second generated partial images. Said optical projection section or optical projecting section is adapted and/or arranged in order to receive said first or s polarized secondary illumination light component and said second or p polarized secondary illumination light component of said secondary illumination light as light of said first and said second partial images, respectively, and in order to project said first or s polarized secondary illumination light component and said second or p polarized secondary illumination light component as said first and said second partial image, respectively, to thereby generate and project said image to be displayed.

According to a first solution of the object underlying the present invention said image generating section comprises a first and a second independent image generating means which are assigned to said first or s polarized polarization state and said second or p polarized polarization state and which are adapted and/or arranged in order to independently from each other receive said first or s polarized primary illumination light component and said second or p polarized primary illumination light component of said primary illumination light, in order to independently from each other generate said first and said second partial images based on said first or s polarized primary illumination light component and said second or p polarized primary illumination light component of said illumination light, respectively, and in order to independently from each other provide said first or s polarized secondary illumination light component and said second or p polarized secondary illumination light component of said secondary illumination light as light of said generated first and said second generated partial image, respectively.

Additionally said optical projecting section comprises a single and common optical objective which is common for said first or s polarized polarization state and said second or p polarized polarization state and which is adapted and/or arranged in order to commonly receive said first or s polarized secondary illumination light component and said second or p polarized secondary illumination light component of said secondary illumination light as light of said first and said second partial image, respectively, and in order to commonly project said first or s polarized secondary illumination light component and said second or p polarized secondary illumination light component as said first and said second partial image, respectively, to thereby generate and project said image to be displayed.

It is therefore a basic idea of the first solution of the object underlying the invention to provide two independent image generating means which work independently with respect to said first or s polarized polarization state and said second or p polarized polarization state and to provide a single and common optical objective which works commonly for said first or s polarized polarization state and said second or p polarized polarization state.

According to the second solution of the object underlying the present invention said image generating section comprises a single or common image generating means which is common for said first or s polarized polarization state and said second or p polarized polarization state and which is adapted and/or arranged in order to commonly receive said first or s polarized primary illumination light component and said second or p polarized primary illumination light component of said primary illumination light, in order to commonly generate said first and said second partial images based on said first or s polarized primary illumination light component and said second or p polarized primary illumination light component of said illumination light, respectively, and in order to commonly provide said first or s polarized secondary illumination light component and said second or p polarized secondary illumination light component of said secondary illumination light as light of said generated first and said second generated partial image, respectively.

Additionally, said optical projecting section comprises a first and a second independent optical objective which are assigned to said first or s polarized polarization state and to said second or p polarized polarization state, respectively, and which are adapted and/or arranged in order to independently from each other receive said first or s polarized secondary illumination light component and said second or p polarized illumination light component of said secondary illumination light as light of said first and said second partial image, respectively, and in order to project said first or s polarized secondary illumination light component and said second or p polarized secondary illumination light component as said first and said second partial image, respectively, to thereby generate and project said image to be displayed.

It is therefore a basic idea of the second solution of the object underlying the invention to provide a single or common image generating means which works commonly for said first or s polarized polarization state and said second or p polarized polarization state and to provide a first and a second independent optical objective which work independently from each other with respect to said first or s polarized polarization state and said second or p polarized polarization state, respectively.

According to the third solution of the object underlying the present invention said image generating section comprises a first and a second independent image generating means which are assigned to said first or s polarized polarization state and said second or p polarized polarization state, respectively, and which are adapted and/or arranged in order to independently from each other receive said first or s polarized primary illumination light component and said second or p polarized primary illumination light component of said primary illumination light and in order to independently from each other generate said first and said second partial images, respectively, based on said first or s polarized primary illumination light component and said second or p polarized primary illumination light component of said primary illumination light, respectively, and in order to independently from each other provide said first or s polarized secondary illumination light component and said second or p polarized secondary illumination light component of said secondary illumination light as light of said generated first and said second generated partial image, respectively.

Additionally, said optical projecting section comprises a first and a second independently optical objective which are assigned to said first or s polarized polarization state and to said second or p polarized polarization state, respectively, and which are adapted and/or arranged in order to independently from each other receive said first or s polarized secondary illumination light component and said second or p polarized secondary illumination light component of said secondary illumination light as light of said first and said second partial image, respectively, and in order to independently from each other project said first or s polarized secondary illumination light component and said second or p polarized secondary illumination light component as said first and said second partial image, respectively, to thereby generate and project said image to be displayed.

It is therefore a basic idea of the third solution of the object underlying the present invention to provide independent first and second image generating means which work independently from each other with respect to said first or s polarized polarization state and said second or p polarized polarization state and to provide independent first and second optical objectives which work independently from each other with respect to said first or s polarized polarization state and said second or p polarized polarization state.

According to a preferred embodiment of the image generating and projecting arrangement according to the present invention said light generating/ receiving section comprises independent first and second light generating/receiving means which are assigned to said first or s polarized polarization state and said second or p polarized polarization state and which are adapted and/or arranged in order to independently from each other generate/receive said first or s polarized primary illumination light component and said second or p polarized primary illumination light component of said primary illumination light, respectively.

Alternatively, said light generating/receiving section may comprise a common light generating/receiving means which is adapted and/or arranged in order to commonly generate/receive said first or s polarized primary illumination light component and said second or p polarized primary illumination light component of said primary illumination light.

According to a further preferred embodiment of the inventive arrangement a display section may be provided which is adapted and/or arranged in order to receive said secondary illumination light or a derivative thereof, e.g. tertiary illumination light thereof as light of said first and said second partial images and in particular as light of said image and which is further adapted and/or arranged in order to display said image.

According to a further alternative or additional embodiment of the inventive arrangement, said display section may comprise a plurality of display screens which are adapted and/or arranged in order to receive said secondary illumination light or a derivative thereof, e.g. tertiary illumination light, as light of said first and said second partial images and in particular as light of the image and which are in each case adapted and/or arranged in order to display said image or a respective part thereof.

### Fourth solution

According to a fourth solution of the object underlying the present invention said image generating and projecting arrangement comprises a light generating/receiving section which is adapted and/or arranged in order to generate and/or receive primary illumination light as light for an image to be generated, projected and to be displayed. Additionally an image generating section is provided which is adapted and/or arranged in order to receive said primary illumination light as light for said image to be generated, to generate said image and to provide a secondary illumination light as light of said generated image. Further an optical projection section is provided which is adapted and/or arranged in order to receive said secondary illumination light as light of said generated image and to project said secondary illumination light as tertiary illumination light and to thereby project said image. Further, a display section is provided which is adapted and/or arranged in order to receive said tertiary illumination light as light of said projected image and to display said image. According to the fourth solution of the object underlying the present invention said display section comprises a plurality of display screens which are adapted and/or arranged in order to receive said tertiary illumination light as light of said projected image or of a part thereof and to display said image or a respective part thereof.

According to a preferred embodiment of the present invention planar display screens may be used as said display screens.

It is of advantage to use two display screens.

In this case said two display screens may be arranged in a back-to-back relationship and/or with an angle of about 180° between them, in particular with respect to their respective normal.

It is of further advantage if said display screens are arranged in order to form a concave arrangement of display screens. Therefore the display screens may include a respective part of space and they may therefore be viewed by a user in operation from the inside of said included part of space.

Additionally or alternatively said display screens may be arranged with their normals essentially lying in a common plane.

According to a further preferred embodiment of the present invention a common projection may be assigned to and displayed on the plurality of said display screens. Alternatively a plurality of projections may be assigned to and displayed on said plurality of display screens, in particular having the same numbers of projections and display screens.

According to a further alternative of the present invention to each projection screen a distinct projection may be assigned to and projected on, in particular in a one-to-one relationship.

According to a further preferred embodiment of the present invention one or a plurality of sensor means is provided which is adapted and/or arranged in order to sense or measure at least one physical, chemical and/or biological entity or property of the environment of the arrangement and in particular of a user of the arrangement, derivatives thereof and/or data in connection therewith as measurement data.

### Fifth solution

According to a fifth solution of the object underlying the present invention said image generating and projecting arrangement comprises a light generating, receiving section which is adapted and/or arranged in order to generate and/or receive primary illumination light as light for an image to be generated, projected, and to be displayed. Additionally an image generating section is provided which is adapted and/or arranged in order to receive said primary illumination light as light for said image to be generated, to generate said image and to provide secondary illumination light as light of said generated image. Further, an optical projection section is provided which is adapted and/or arranged in order to receive said secondary illumination light as light of said generated image and to project said secondary illumination light as tertiary illumination light and thereby projecting said image. Additionally, a display section is provided which is adapted and/or arranged in order to receive said tertiary illumination light as light of said projected image and to display said image. Additionally, one or a plurality of sensor means is provided which is adapted and/or arranged in order to sense at least one physical, chemical and/or biological entity or property of the environment of the arrangement and in particular of a user of the arrangement, derivatives thereof and/or data in connection therewith as measurement data.

According to a further preferred embodiment of the present invention one of the group consisting of physical sensors, chemical sensors, biosensors, cameras, microphones and/or the like is used as a sensor means.

Alternatively or additionally, the inventive image generating and projecting arrangement is adapted and/or arranged in order to display said measurement data or derivatives thereof.

Preferably, the image generating and projecting arrangement according to the present invention is, is a part of or comprises a near to face display device.

Additionally or alternatively the image generating and projecting arrangement according to the present invention is, is a part of or comprises a see-through display device. Further additionally or alternatively, the image generating and projecting arrangement according to the present invention is, is a part of or comprises a personalized or personal augmented bio-sensing display device.

These and further aspects of the present invention will be elucidated in more detail by taking reference to the following remarks:

The present invention inter alia relates to so called near to face displays in particular for personal or personalized augmented bio-sensing environments and more particular to the field of applications of the type of "Lifedream Book", "Snow White Wellness Mirror", "Silhouette Dress Mirror", "Orexia Health Tablet", "Coin-Station Playboard", "Optical Workstation", "In-Car Virtual Entertainment" and the like.

As display technologies progress, visual information is required to be "shaped" to fit personalized environment. At the same time in such a "near to face" (<1m) environment, new applications open ways on how to use supplementary (bio)-sensing and visual capture technologies to complete a "virtual augmented environment" with information drawn from any kind of storage media to be superimposed to "real world" information ("personal server", "world wide web" etc).

On the other hand there is in recent days a trend to try to stitch visual information on large scale displays/projection by adding display/projection sub-segments and correcting "gaps" by software or in optical hardware means.

Since the greatest challenge for such applications starts from the "Display/ Beam shaping", it is necessary to apply special projection/display technology to overcome that circumstances on an efficient and economic way.

In the present invention report a basic architecture is presented, proposing the use of a single and compact optical projection technology, to illustrate capabilities for folded multi-displays in a personal environment, with application examples using additional non invasive, real time sensing/capturing capabilities. The flexibility to use interchangeable such devise for mobile or stationary docking station application opens new opportunities to change industry rules on perceiving visual information (to be positioned between "Near2Eye" (Glasstron-PC Approach) - "Near2Face" (Optical Micro Projector Display) - "Tele-Vision" (TV-Approach).

The possible goal of the invention is inter alia the realization of the display technology for (un-)folded multi screen/display, using simultaneous micro-projection as well as the realization of the application designs for:
- "Bedroom/Kitchen or Foyer like" virtual Book (folded twin surface display), which can be hold as mobile devise or even floating on air, using eye tracking mechanism for information platform (Web Browsing) or Pop up of virtual (3D) images related to personal storage information as pictures, stories etc. (the "Lifedream Book").
- "Bathroom like" virtual mirror with folded twin surface display, for face image control and comparison to past years/events (the "Snow White Beauty Mirror").
- "Body Shape like Mirror" (folded twin surface display) for virtual Dress up and Silhouette comparison checking to past years/events "Silhouette Dress Shop".
- "Tablet like" virtual Table (unfolded display), where information on menus is displayed, and food is sensed that way to be compared in respect to "diet-trophologic" storage data "the Orexia Health Tablet". Also to be used for flipper/table tennis or similar virtual gaming.
- "Sony Playstation like" environment for virtual gaming among two or more partners, using two side unfolded screen (like two sides of a coin, for two players) or polygon folded display screen for more than one players (the "Coin Station Playboard").
- "Optical Workstation" for augmented office working environment, with bio-sensing capabilities. To combine the flexibility of a Screen as display and an Optical Devise for direct rear (front) illumination onto multiple screens (notifying, signalling, interacting).
- "Multi projection in car entertainment" virtual environment for Driver/Co-driver (folded twin surface display) displaying fitness condition of driver or even for all passenger entertainment projection (multi surface projection on front and side panes), displaying real outside captured environment for virtual gaming inside car (the "In-car Entertainment").
   In all above application the micro projector devise can be used as a portable equipment to a docking station. Therefore multiuse is its major feature.

### State of Art Drawbacks:

- Current technologies are limited by size and cost of display. For regular LCD/OLED/PLASMA and similar displays size matters and therefore multi-display capabilities too.
- Further, beam shaping offers the possibility to display under variable angles for multi display projection. Therefore one beam can be used to be split and redirect to different surfaces. It remains a fact of the input light power. A singe modulator can be used theoretically to project same or even different images on various observers, without physical hardware display, just by beaming. Projection is flexible to be "moved around"
- However, projection technologies are traditionally bulky, so one is limited to realize such "near to face" applications.
- Another key issue is that for most applications, a transparent screen or surface must be used without interfering to the required view capabilities (transparent glass like for the "Coin Station Playboard", "In Car entertainment" or reflecting mirror like for the "Silhouette Dress Shop" or the "Snow White Beauty Mirror").
- Technically speaking the use of one light source (number of pupil points) for rear projection has affect on the illumination uniformity on the screen. Instead the higher number of optical engines proposed in the current architectures will strongly improve.
- Usually special polarization management on screen level is required (using lenticular parallax barriers) to realize stereoscopic display at the cost of resolution (using stripes) or on wearing special glasses (to discriminate polarization) or on brightness (to generate polarization DLP).

### (Un-)folded multi screen/display, using optical micro-projection

The development of an optical devise, with the use of new upcoming light sources (LEDs) causes a drastically size reduction compared to standard projectors (so called optical engines). This allows new optical architectures and integration in small and compact in electronic products like notebooks, handheld organizer, camcorders, mobile phones, DVD players, game consoles, lamp type projectors etc, something what was not possible up to know with conventional projectors.

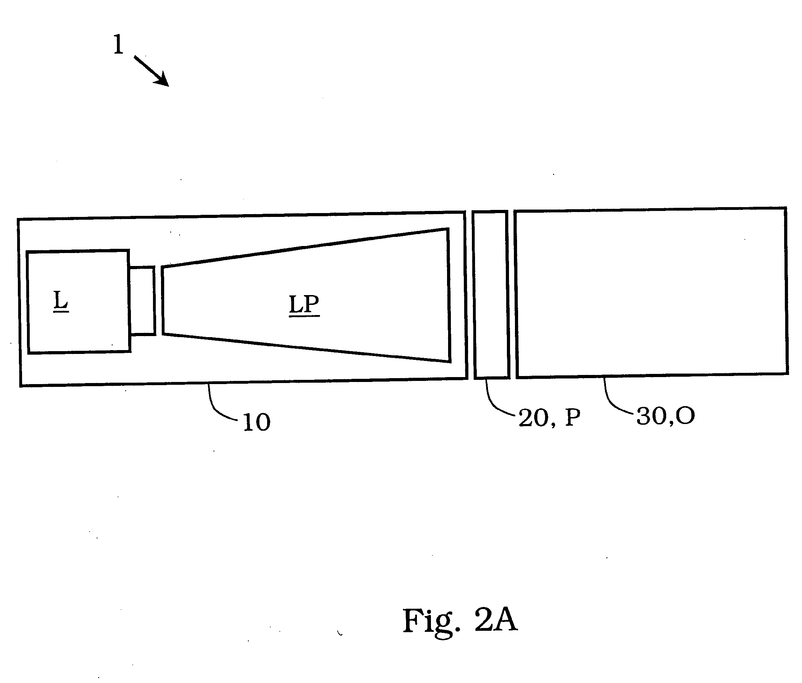

The basic architecture to realize such devise is mainly consisting of four major parts only and is shown in Fig. 2A: 1. a semiconductor light source LS, as for example LEDs, 2. a light pipe LP to collect and couple the light and therefore to achieve a uniformity for the illumination of a panel P. Finally, 4. an objective lens O to project the illuminated panel image.

Whereas, the light source LS is key for the overall device performance, the throughput efficiency is basically determined by the light modulator (panel) and the associated optical illumination architecture. There are basically two type of panels: reflective and transmittive. Modulation technology can be either liquid crystal technology (LCD) or micro-mechanical modulation technology (MEMS). Whereas, the transmittive LCD and the reflective MEMS (DLP) technology are broadly applied, the reflective LCD and transmittive LCD is just on its infancy. The simplest architecture preferred to compromise highest efficiency and compactness, is proposed the "unfolded" system shown in Fig. 2A, using transmittive types panels.

The advantage of using semiconductor light source, is the capability of very fast switching light modulation for the three fundamental colours (RGB). With the prerequisite of an adequate fast modulation panel to handle full colour (RGB), Fig. 2A. illustrates the most compact full colour transmittive panel architecture.

To satisfy "Near to face" display application advanced OMP architectures are further proposed:

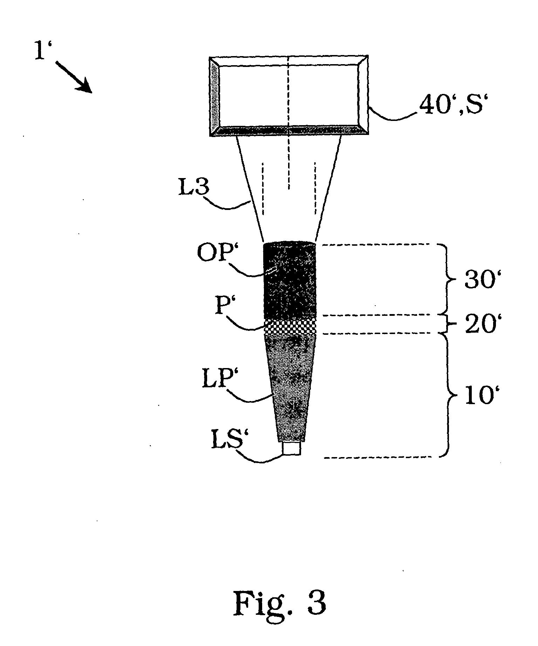

Taking into consideration the possible architectures for the Optical Micro-Projection there are four categories respecting the number of micro displays (P for panels) and that of the Objective Lenses (O for Objective), they are shown schematically in Fig. 3 to 6:

| | Panels | Objectives | Resolution | Brightness |
|---|---|---|---|---|
| a. | 1 | 1 | Half | Full |
| b. | 2 | 1 | Full | Full (x 2 with p- & s-Polarization) |
| c. | 1 | 2 | Full | Half (p- & s-Resolution possible) |
| d. | 2 | 2 | Full | Full x 2 with p- & s-Polarization) |

Ad a: One common panel P' is used with one common objective O', as is shown in Fig. 3, to achieve full brightness on the illuminated surface S', however at half resolution compared to b.

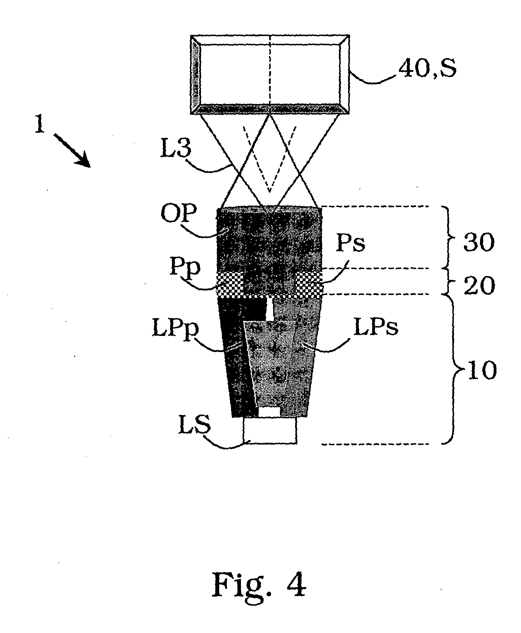

Ad b: Here full resolution can be achieved by the use of two independent panels Ps and Pp and one common objective O, as is shown in Fig. 4. The brightness can be even doubled by the use of the s and p polarization for LCDs where normally the half of the light is lost (in contrary for the MEMS modulators this design is not necessary, since there is no limitation due to polarization losses). Of course this requires a special out coupling or splitting mechanism of the illumination part into s and p polarized light before it enters into the two independent panels Ps and Pp for s and p polarized light respectively

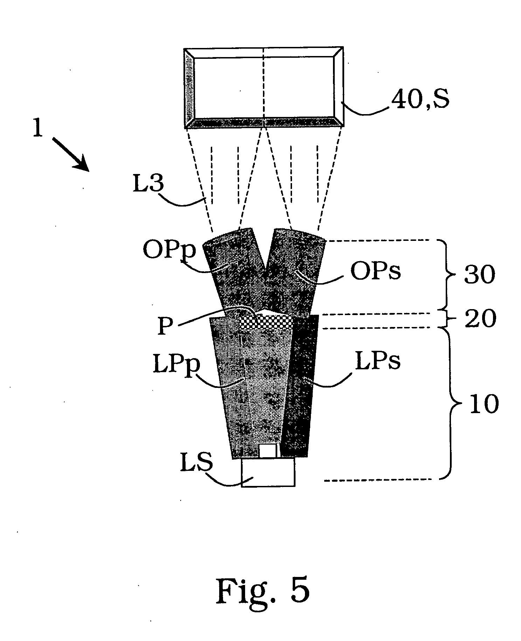

Ad c: Here one common panel P is used together with two independent objectives Os and Op, as is shown in Fig. 5. It is possible to follow the similar splitting mechanism as for b, however the single panel P will have to accommodate the two light proportions for s and p polarized light falling on it under two different angles of incidence. Since in this case the panel P will have to switch sequentially for the first and the second objective lens Os and Op the brightness will be divided by two. Also an s and p polarization "recycling" in this case will provide any improved efficiency. Using two independent Optical Micro displays and objective lenses, one can of course achieve higher brightness, however at higher cost compared to the solution b, due to objective lenses.

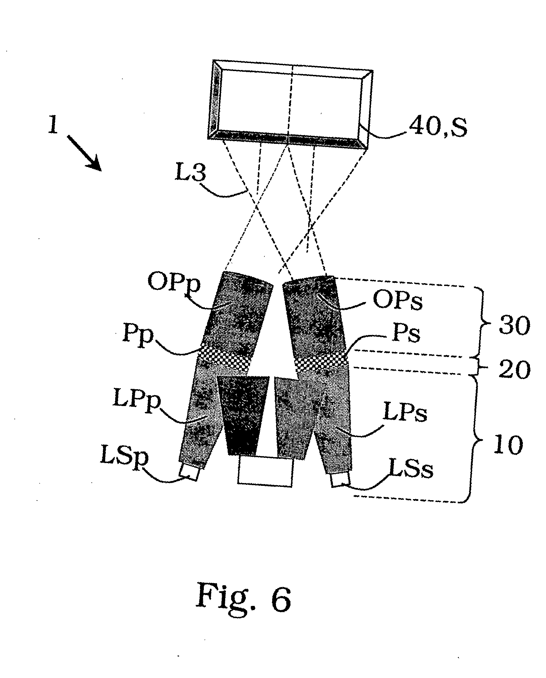

Ad d: Here two independent panel Ps and Pp are used together with two independent objectives Os and Op, as is shown in Fig. 6.

Of course the above architectures can be applied for a variety of triple or higher order folded surfaces using similar basic OMP arrangements. It also can be realized for rear or even front projection (for example head mounted double projectors).

### Applications

### "Near to Face" Displays for Personalized Augmented Bio-sensing Environments

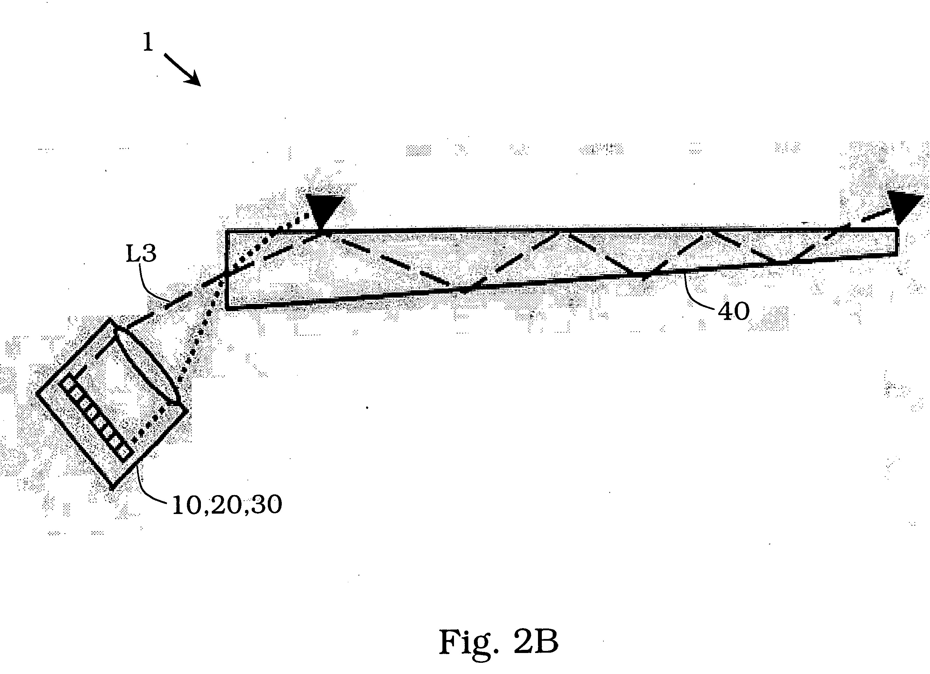

Outlined is a general description of the features, which could apply and give additional benefit (not described in technical detail here) to the following wireless/mobile display applications. A general view of the "near to face" and "see through" concepts is shown in Fig. 2B:

### Ambient Intelligence

Ambient Intelligence is based on Wireless Intelligent distributed network of Devises, will provide an implicit way of controlling, sensing and perceiving our environment and our personal data and will allow novel methods to communicate with devices based on human abilities. Using developments of advanced micro system solutions as (bio)-sensors and actuators, the integration within the wireless display devices will be covered in order to increase functionalities and to bring a technological platform for allowing ambient intelligence to become reality. As examples of sensors that could be integrated in the terminal could be inertial mechanical sensors (pressure, waves, sounds), haptic/tactile sensors, biological sensors, eye tracking sensing mechanisms etc. This will allow non invasive real time control of human physiological functions, which can be displayed real time. Also with sensor network and short-distance communication capabilities, the initial functionalities of the "near to face" displays towards the monitoring and communication with the environmental physical world, inside buildings or in the outdoor environment can be realized. Supplementary functionalities can be added by allowing the display devise to communicate with already existing sensors, for example part of a distributed wireless sensor network, to retrieve data from the sensors or eventually to control their parameters.

### Display Screen enhancement by reflection

Due the advantage of using semiconductor light sources a special screen can be applied, which is has a characteristic feature to reflect the special selected wavelengths (for example of the LEDs) very efficient and absorb the ambient light. So the image on the screen occurs brighter as on normal screens. This can lead to high gain factors.

### Augmented Surfaces

With the help of data recording using cameras the real images can be superimposed to virtual data and projected back to original projection surface or to a folded twin surface. Using projectors, one can deliver notifications, to dynamically create collaborative displays on tables and walls, and to contribute to personalization.

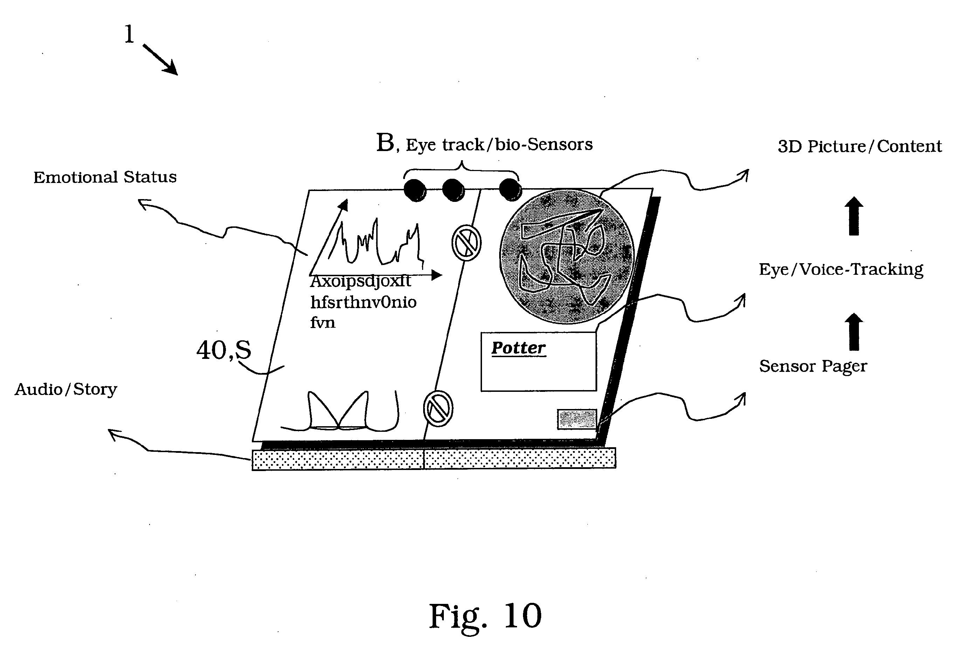

### Dreamlife Book (Fig. 10)

Following features are envisaged for this Product :
1. 2D Optical Display, to be read as a common book by sensor page changing (for example optically, speech recognition, touch screen)
2. While keep both hands on the book or away of the book, to be able to provide
3. 3D Capabilities, to be able to display 3D pictures/content
4. by Eye tracking, touch screen or speech recognition and further
5. to display active emotional status by
6. bio-sensors for measuring breath, sweat, hand-blood pressure, skin-face colour..
7. using optical, haptic, physico-chemical sensoric or sensory means
8. Besides visual also audio capabilities for "story" telling can be embedded

This book could be used for example as a gateway information platform for instant web browsing inside foyer space in houses/kiosks/exhibition places, also for kids "going to bet & dreaming" or older people "lying on bed & dreaming", while book is floating in free space above to tell stories and pop up 3D images by data retrieving data from personal storage bank.

To realize an electronic book usage can be made any of the above mentioned OMP architectures of Fig. 3 to 6, for a rear projection.

These architectures can be considered as unfolded or twin folded display screens.

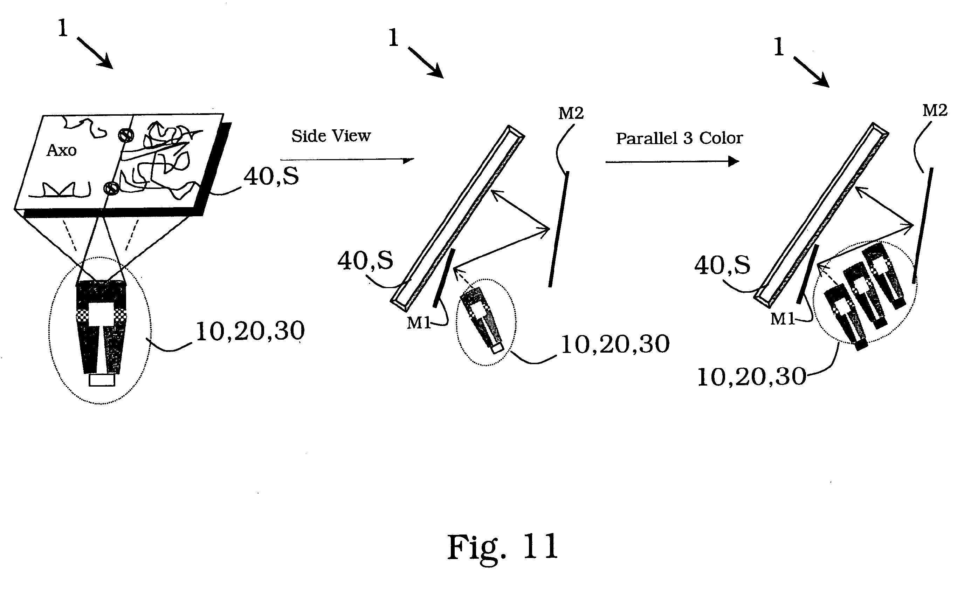

Preferably an architecture of Fig. 4 would provide the advantage of the use of full resolution on both sides of the book at full brightness and by saving the cost of one objective lens when compared to version according Fig. 6. Therefore, for example in Fig. 11 a rear projection standard design could be used in connection with the chosen OMP architecture (two Mirror Rear Projection). Instead of a single system according to Fig. 3 to 6 for a three colour sequential design a three colour parallel system can be also used.

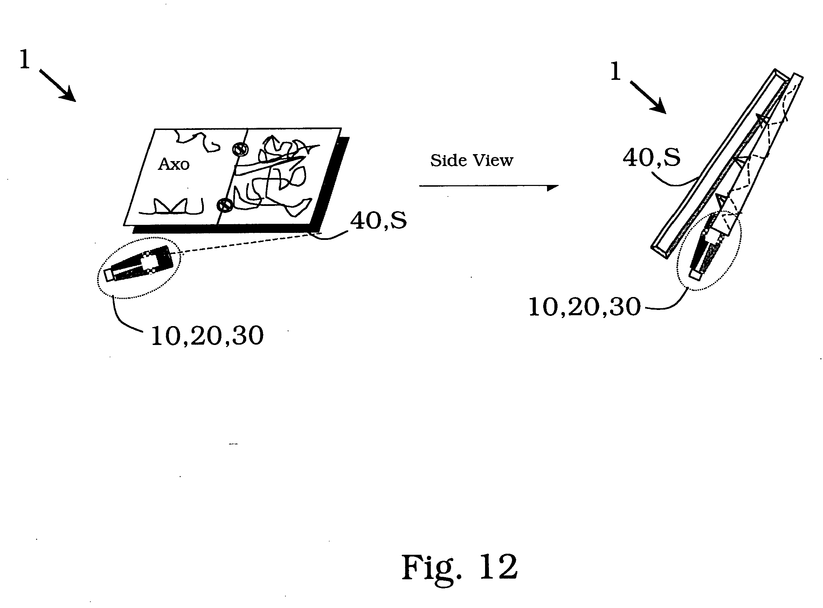

In Fig. 12 an alternative can be considered using a so called wedge out coupling mirror. In this case light from the OMP is directly coupled to the polymer massive (usually PMMA) conic shaped light pipe, whereas light is propagating to be out coupled by internal reflections towards the book display.

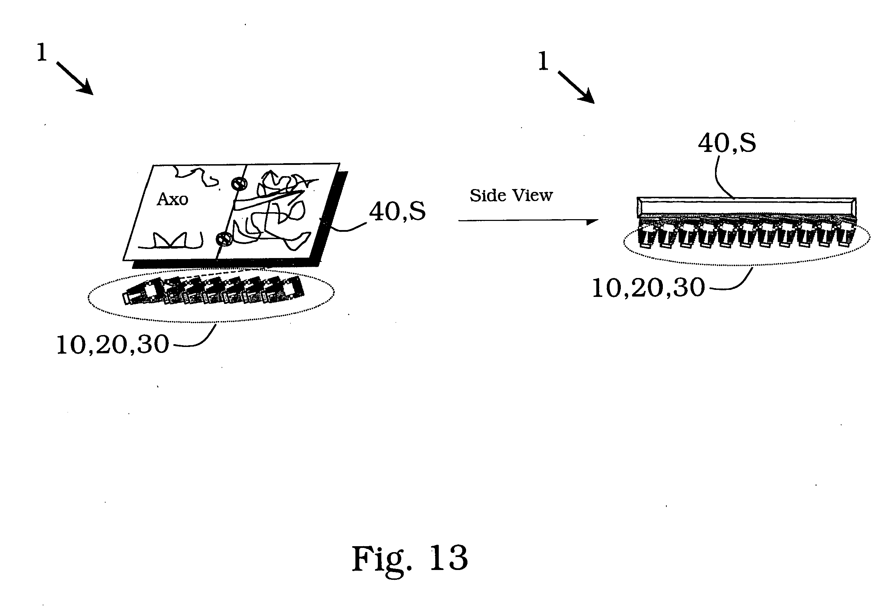

Another future compromise technology between the well known flat panel LCD or OLED displays and the bulky rear projection TV like displays, could be the use of multi stack OMPs when their mass manufacturing costs is dramatically decreased. This design is illustrated in Fig. 13. These could be used for example as direct back illumination, without the use of any side or wedge like mirrors.

Using more than one light sources (number of pupil points, Fig. 13) for rear projection, that has affect on the illumination uniformity on the screen. Instead the higher number of optical engines proposed in the current architectures will strongly improve on that point, compared to state of art, using single source (one UHP) illumination. Also, particular weakness on the illumination of the corners or on the interface between the two book pages will improve.

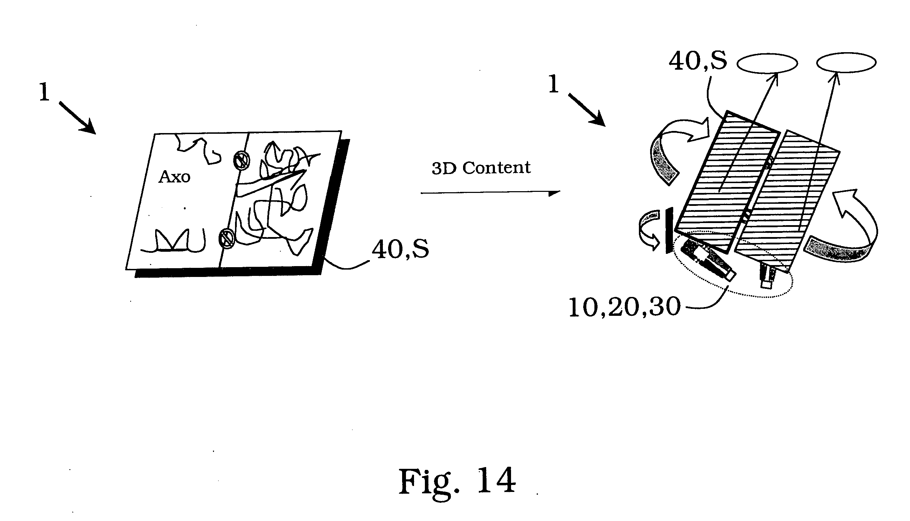

To realize the capabilities for auto stereoscopic 3D display traditionally by using the effect created by s- and p- polarized light for the left and right eye respectively (OMP version of Fig. 4, 5, 6). In this case however wearable glasses are necessary to discriminate different information for the two eyes. Another way is by using a special mask on the screen for creating the parallax effect (OMP version a. for example). This normally occurs at a cost of the resolution due to the special stripes on the screen. One can avoid that by using the specific incident angle, which can be realized in all three cases (Fig. 4, 5, 6) in dependence with the polarization. In this case the screen needs to be micro structured accordingly, in order to handle the two different incident angles. Third possibility of creating 3D content could be on mechanical means, by moving the two folded surfaces (both sides of the open book) against each other, that way to adjust a fixed position for 3D eye accommodation. In this case no special mask need to be used and therefore display resolution and brightness will be doubled compared to the first possibility with the using wired mask (Fig. 14). At a certain angle regular 2D information can be read on the screen, whereas at another certain angle the auto stereoscopic information will "pop up". Alternatively, this also can be realized by mechanically moving the mirror or even the OMP into a certain position, where auto stereoscopic condition is satisfied.

Because of this application, eye accommodation is not requested over long time period, but rather for short auto stereoscopic information snap shots. It is also rather simple to find position for the auto stereoscopic information within the appropriate depth of optical field, without any head tracking as currently used by the state of art.

All configurations illustrated in Fig. 11 to 14 apply to the designs of Fig. 3 to 10 for projections.

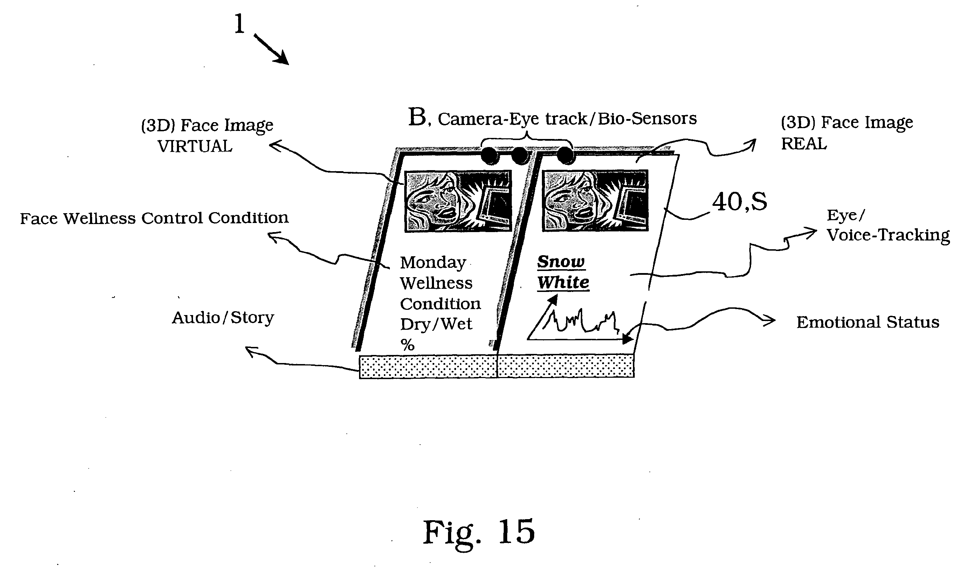

### Snow White Wellness Mirror (Fig. 15)

Following features are envisaged for this Product :
1. 2D Optical Display (opt. Auto-Stereoscopic) face image, daily event agenda.
2. by eye tracking or speech recognition means, to induce capabilities of "Snow White Story" display for augmented visual face related information environment, using camera and image processing algorithms.
3. to display active emotional status/face wellness condition by using optical remote sensing technologies & bio-sensors for measuring breath, sweat, hand-blood pressure, skin-face colour etc.

The mirror is thought to be one of the few opportunities that face is coming in proximity of a display. It could be used for example as a daily "to-do" agenda information platform for example during morning preparation in the bathroom, in house foyer space, public recreation areas etc. In particularly, the association with the biosensors to display face wellness condition (stress-relax, smell-perfume, dry-skin-crème, fat content-exercise, colour decay-hair spray etc.) for ladies, who also would like to compare their condition or outfit to past occasions or other third person habits.

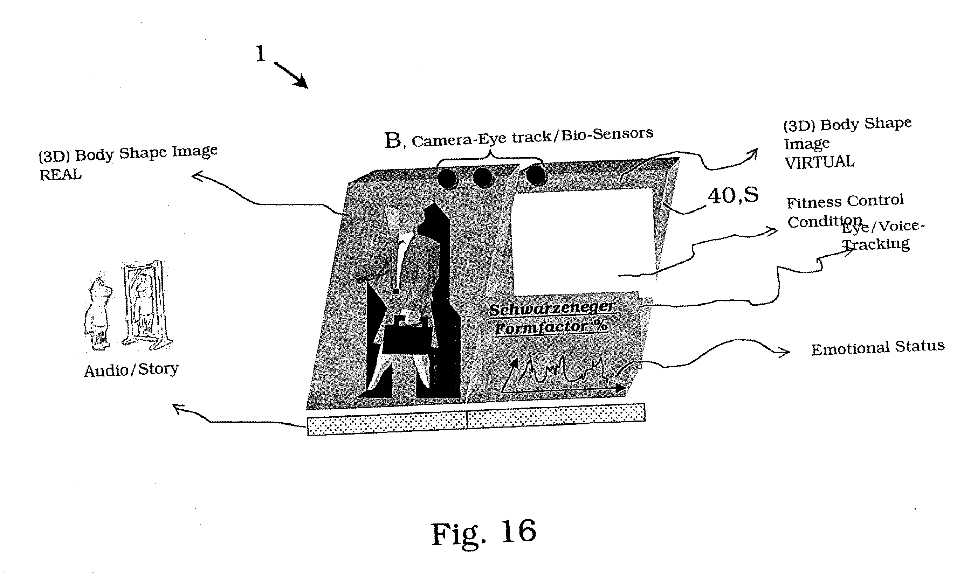

### Silhouette Dress Mirror (Fig. 16)

Following features are envisaged for this Product :
1. 2D Optical Display (opt. Auto-Stereoscopic) indicate body shape-virtual dress
2. by eye tracking or speech recognition means, to induce capabilities for displaying augmented body shape-virtual dress information environment, using camera and image processing algorithms
3. to display active emotional status/body fitness condition by using optical remote sensing technologies & bio-sensors for measuring remotely volumetric 3D-shape, weight, fat content, sweat, blood pressure, skin-face colour etc

The mirror is thought to be used for example as a virtual shop cabin for dressing and testing new clothes to fit individual body shape. The mirror is equipped with a 3D camera (Infrared + depth camera sensors) to record body image and augment onto into the virtual storage data with dressing information. Also further, it can be used in fitness studios or at home for comparing in particularly in association with bio remote body (shape) sensors (i.e. weight, fatness, sweat, blood pressure, skin condition) current fitness-shape condition to past outfit or to third person.

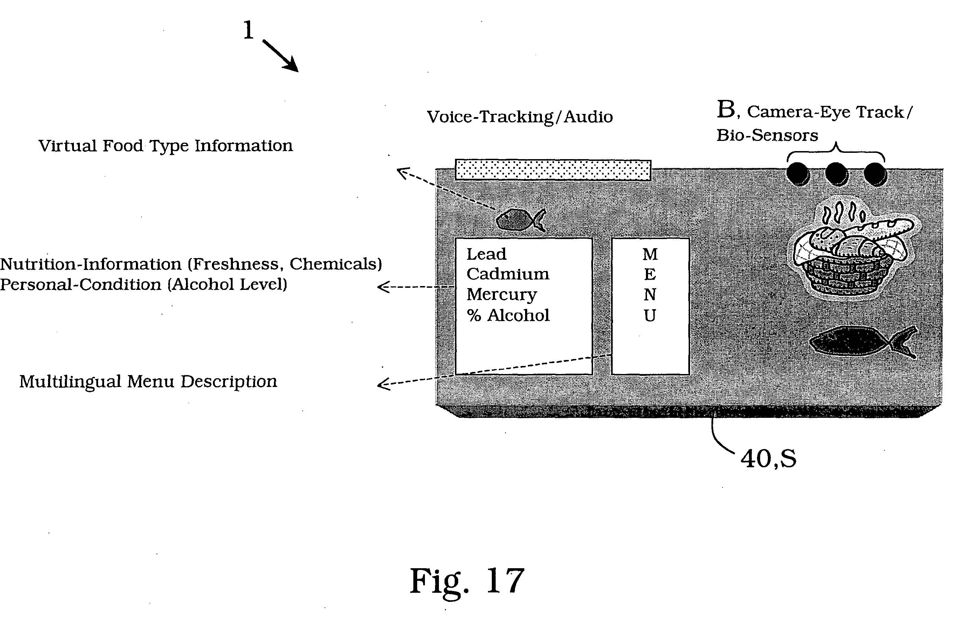

### Orexia Health Tablet (Fig. 17)

Following features are envisaged for this Product :
1. 2D Optical Display (opt. Auto-Stereoscopic) to display menu catalogue multilingual ordering data indicate Nutrition Information "Should-Is" status of ordered-served food.
2. by eye tracking or speech recognition means, to induce capabilities for displaying augmented information environment, using camera and image processing algorithms to indicate desired objects graphics
3. to display wellness condition and alcoholic consumption level by using optical or other means & bio-sensing technologies for measuring food condition, freshness, degradation, chemical content, smell, shape, fat, calories. Also to monitor and superimpose consumer condition information, based on sweat, alcohol level, blood pressure, skin-face colour etc

The Orexia Tablet is thought to be used on restaurant or fast food tables for entertainment purposes or also for example as a virtual display information of food to be explained in a foreign country using multilingual audio visual capabilities. Further it should display the menu with explanation and compare pre saved nutrition information data, with those after served. Bio-sensing acquisition real food data using optical spectro-photometric means for food condition detection (i.e. freshness, degradation, chemical content, smell, shape, fat, calories). Also to monitor and superimpose consumer condition information, based on sweat, alcohol level, blood pressure, skin colour etc.

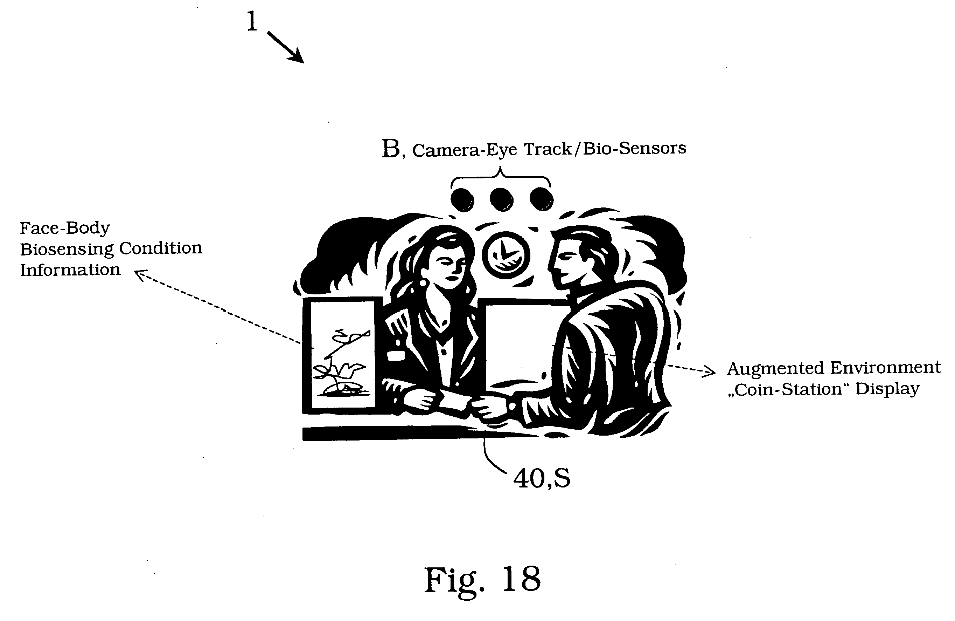

### Coin-Station Playboard (Fig. 18)

Following features are envisaged for this Product :
1. 2D Optical (opt. Auto-Stereoscopic) entertainment Display
2. by eye tracking or speech recognition means, to induce capabilities of augmented virtual face related information environment, using cameras and image processing algorithms
3. to display active emotional status/face wellness condition by using optical sensing technologies & bio-sensors for measuring breath, sweat, hand-blood pressure, skin condition, face colour, etc.

The Coin-Station (two-side simultaneous gaming) play board is thought to be used as an entertainment tool like play station, however for two players (Design E, F) or for more than one (Design G., alternatively design F with polygon folded surfaces). Whereas here the idea is that players can watch each other to assess-forecast behaviour of other player, whereas using cameras augmented environment can be realized during the game. Further using bio-sensing capabilities (i.e. smell, stress, blood pressure, skin condition etc.) will be possible to support the physical information and consider into next player reaction, as in a real situation player would behave.

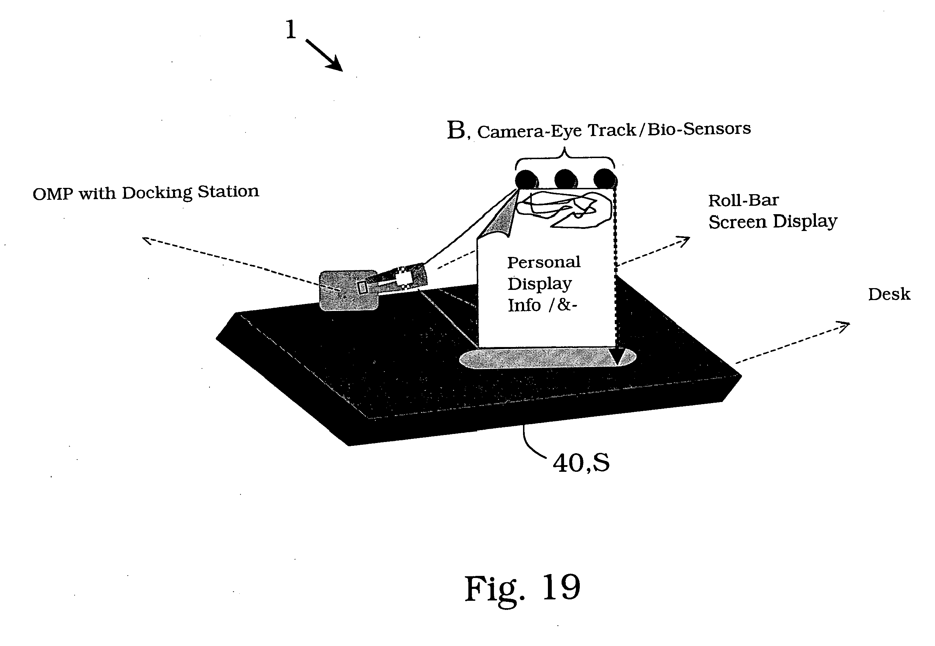

### Optical Workstation (Fig. 19)

Following features are envisaged for this Product :
1. 2D Optical (opt. Auto-Stereoscopic) Projection Monitor like Display with Docking Station
2. by eye tracking or speech recognition means, to induce capabilities of augmented interactive information platform, using cameras
3. to display active emotional status/face wellness condition by using optical sensing technologies & bio-sensors for measuring breath, sweat, hand-blood pressure, skin condition, face colour, eye fatigue etc

The Optical Workstation is thought to be used as an intelligent interactive working environment display. An OMP is placed on a docking station for rear projection onto a flexible roll bar (pull in-out) screen, to be the display. Using cameras augmented environment can be realized during working. Further, using biosensors (i.e. for smell, stress, blood pressure, face colour, skin condition, eye fatigue etc.) will be possible to support the real-physical condition with additional supervising information.

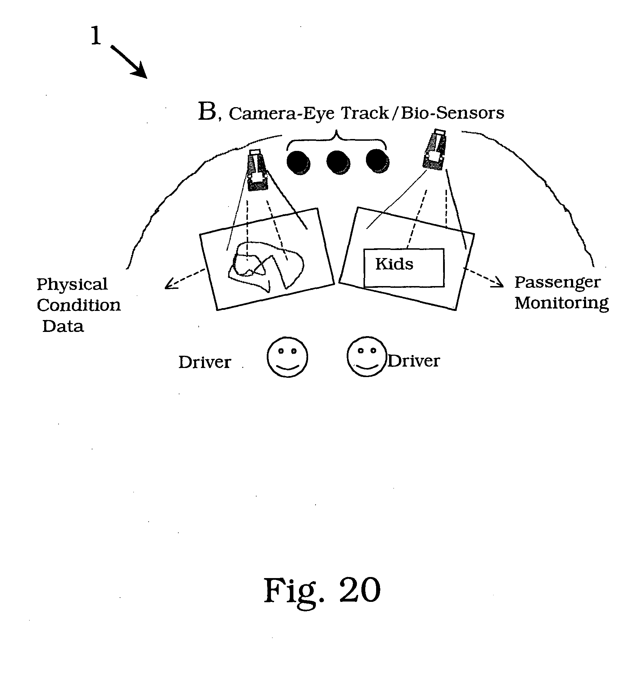

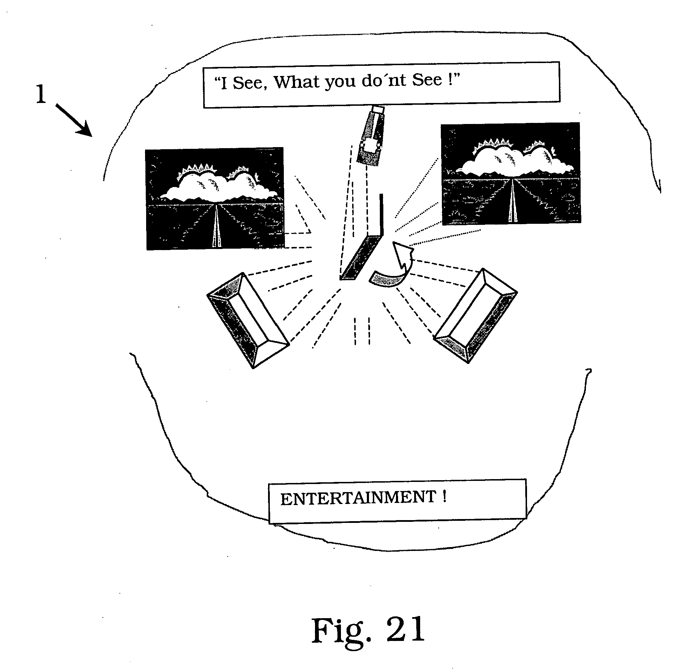

### In-Car Virtual Entertainment (Fig. 20, 21)

Following features are envisaged for this Product :
1. 2D Optical (opt. Auto-Stereoscopic) twin front screen car display or alternatively multi passenger display.
2. by eye tracking or speech recognition means, to induce capabilities of augmented interactive information or entertainment platform, using (interior/exterior cameras) to record passenger inside the car or the landscape.
3. to display active emotional status/face wellness condition of (co)-driver by using optical sensing technologies & bio-sensors for measuring breath, sweat, hand-blood pressure, skin condition, face colour, eye fatigue etc.

The Optical Workstation is thought to be used as an intelligent interactive information-gaming environment display. An OMP is placed for front projection to the car glass screen (requires special features), in case of the driver and co-driver. Using biosensors/cameras inside the car and also exterior cameras, augmented environment can be realized during driving to inform-support physical condition of driver (eye fatigue, stress, blood pressure etc). In the second option for "Multi projection in car entertainment" purposes, the biosensors (i.e. for smell, stress, blood pressure, face colour, skin condition, eye fatigue etc), interior/exterior cameras for all passenger entertainment projection (multi surface projection on front and side panes), display real outside captured environment for virtual gaming inside car, for example "I see what, what you do not see". This requires the capture image to be projected inside car after car has passed object location.

A special mirror is necessary to realize such multi screen projection. This rotating mirror deflects the image of the projector sequentially to surfaces (basically on the glass windows). This low cost solution allows the possibility of using a single modulators, which is fast enough and can be sequentially deflected by the mirror to the different screens with the respective information content. The mirror has the option to pan/tilt including a video camera to detect hand/body activity and project information to the driver- co/driver screen. Therefore, passenger inside the car interact/entertain with the projected/augmented physical world (Exterior cameras) image. Unlike traditional augmented reality applications, users do not need to wear graphics goggles or special input devices. The pan/tilt mechanisms provide dynamic adaptation to changes in the space usage and to different patterns of people activity.

The invention will further be explained bases on preferred embodiments thereof and taking reference to the accompanying figures.
- **Fig. 1**: is a schematical block diagram elucidating basic principles of the present invention.
- **Figs. 2A, 2B**: are cross-sectional side views of an optical micro projector and its application within a near-to-face display device as embodiments of the present invention.
- **Fig. 3**: is a schematical diagram elucidating optical micro projectors of the prior art.
- **Figs. 4 - 9**: are schematical diagrams elucidating preferred embodiments of the present invention.
- **Figs. 10 - 21**: are schematical diagrams elucidating respective personalized augmented bio-sensing environments as embodiments of the present invention.

In the following similar elements and structures with respect to their functionality and construction are denoted by the same reference symbols. A detailed description is not repeated in each case of their occurrence.

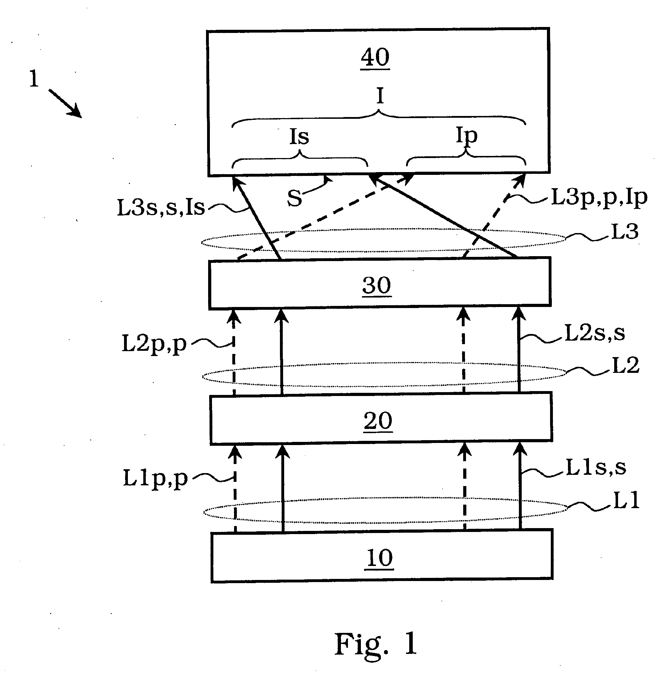

Fig. 1 is a schematical block diagram which elucidates the basic principles of the present invention in the sense of the first to fifth solution of the object underlying the present invention.

Fig. 1 therefore shows a preferred embodiment of the inventive image generating and projecting arrangement 1 which comprises a light generating/receiving section 10, an image generating section or image generation section 20, an optical projection section or optical projecting section 30, as well as a display section 40. The light generating/receiving section 10 generates primary illumination light L1. Said primary illumination light L1 is light for partial images Is and Ip of an image I to be generated, projected and to be displayed, and comprises a first or s polarized primary illumination light component L1s and a second or p polarized primary illumination light component L1p. The image generating section 20 receives said first and second primary illumination light components L1s and L1p, produces a first or s polarized secondary illumination light component L2s and second or p polarized secondary illumination light component L2p as light of said first and said second partial images Is and Ip, respectively. Thereby said first and said second partial images Is and Ip are produced or generated. Said optical projecting section 30 receives said first and said second secondary illumination light components L2s and L2p of said first and second partial images Is, Ip and projects said first and second secondary illumination light components L2s and L2p onto a screen S of the provided display section 40 to thereby project and display said first and second partial images Is and Ip onto said screen S as said image I to be displayed. Said first and second partial images Is and Ip are assigned to said first or s polarized polarization state and to said second or p polarized polarization state of the projected first and second projecting light components or first and second tertiary illumination light component L3s and L3p of tertiary illumination light L3.

Said first and second partial images Is and Ip may be displayed separately or in an overlapping manner either partial overlapping or completely overlapping.

Fig. 2A is a schematical side view of a so-called optical micro projector as an example of an inventive image generating and projecting arrangement 1. The embodiment shown in Fig. 2A comprises a light source L together with a so-called light pipe Lp which both form an example for the so-called light generating/receiving section 10 which is capable of producing primary illumination light L1. Said primary illumination light L1 is then received by a micro display MD as an example for said image generating section 20 which produces upon receipt of said primary illumination light L1 said secondary illumination light L2 realizing the partial images Is, Ip for said image I to be displayed by generating and providing secondary illumination light L2. Said secondary illumination light L2 is then received by the objective O as an embodiment of the optical projection section 30 which upon receipt of said secondary illumination light L2 generates tertiary illumination light L3 or projection light L3 which is projected onto a provided display section 40 having at least one display screen S onto which the partial images Is, Ip and therefore the image I to be displayed are projected.

Fig. 2B demonstrates the application of a optical micro display OMP of Fig. 2A in a near-to-face environment which is realized by coupling said tertiary illumination light L3 into an integration rod I which transports said tertiary illumination light L3 to an out coupling section of said integration rod I where the final image I is formed and coupled out into the viewers eyes.

Fig. 3 is a schematical and cross-sectional side view of a prior art image generating and projecting arrangement 1' which is build up by prior art components for a light generating/receiving section 10 constituted by a prior art light source L' and a prior art light pipe Lp', by a prior art image generating section 20', by a prior art optical projecting section 30' as well as by a prior art display section 40'. In contrast to the present invention the generation of the partial images Is and Ip is not based on separated first or s polarized and second or p polarized polarization component of the primarily generated primary illumination light L1, but is based on primary illumination light L1 with mixed or mingled first or s polarized and second or p polarized polarization components of said illumination light L1.

Figs. 4, 5 and 6 describe basic embodiments of the inventive image generating and projecting arrangement 1 comprising two image generating means Is, Ip and one optical objective O, one image generating means P and two optical objective Os, Op, and to image generating means Is, Ip and to optical objectives Os, Op, respectively.

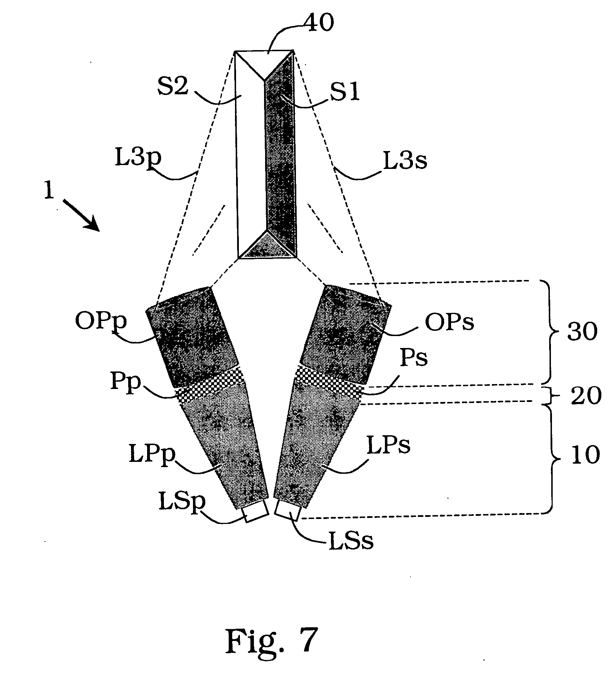

Fig. 7, 8, and 9 demonstrate different embodiments of the inventive image generating and projecting arrangement 1 with a plurality of display screens S1, ..., S5.

In the embodiment of Fig. 7 the provided two display screens S1 and S2 are arranged in a back-to-back relationship within said display section 40. Therefore realizing an angle of 180° between the normals n1 and n2.

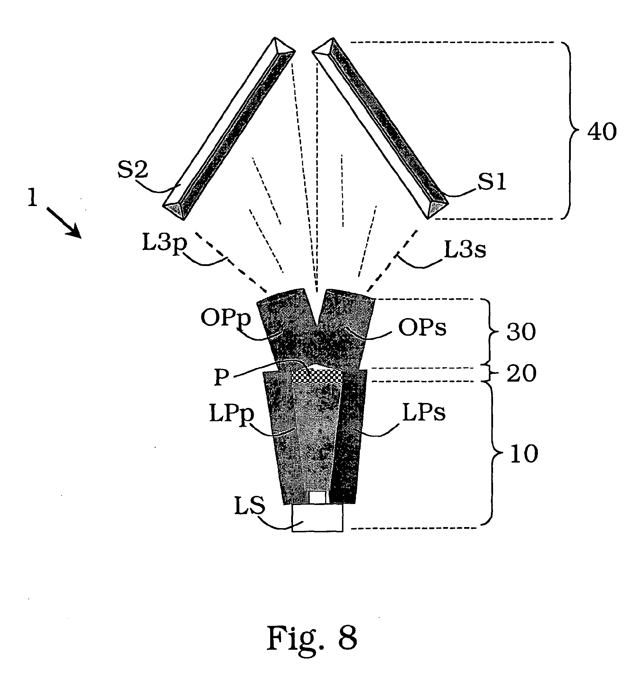

In the embodiment of Fig. 8 first and second display screens S1 and S2 are provided within said display section 40 as separated structures with planar surfaces, where the display screens S1, S2 and in particular their surfaces are oriented and arranged in a concave relationship.

In the embodiments of Figs. 7 and 8 two projections for the partial images Is and Ip may be given.

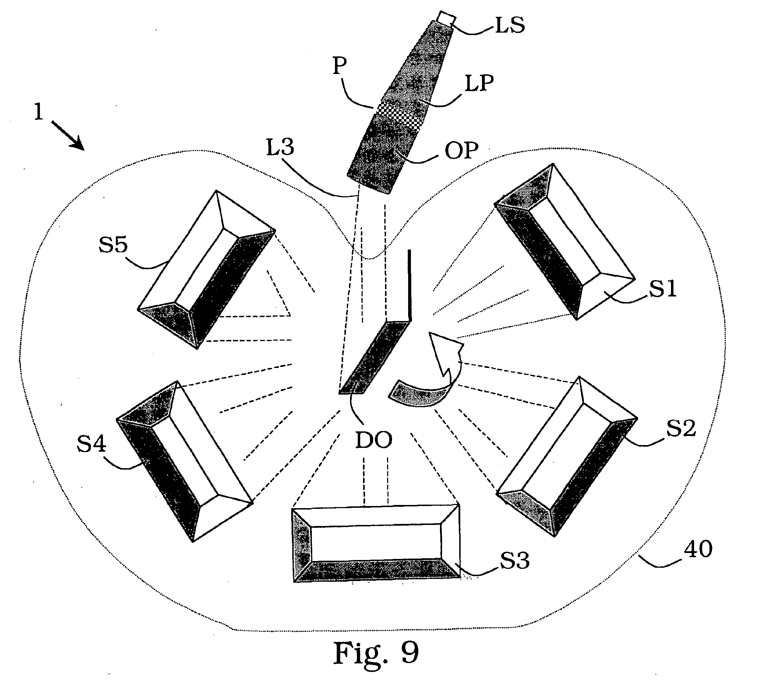

In contrast thereto, the embodiment of Fig. 9 shows the usage of five display screens S1 to S5 which form a concave projection structure wherein their normals N1 to N5 essentially are within a common plane and wherein a single projection is used and then distributed by distribution optics DO to which said tertiary illumination light L3 is supplied.

Figs. 10 to 21 demonstrate the application of the inventive image generating and projecting arrangement 1 as personal or personalized augmented bio-sensing environments as already described above.

### Reference Symbols

- **1**: image generating and projecting arrangement according to the present invention
- **1**': image generating and projecting arrangement according to the prior art
- **10**: light generating/receiving section
- **20**: image generation/generating section
- **30**: optical projecting/projection section
- **40**: display section

- **DO**: distribution optics
- **I**: image to be displayed
- **Ip**: second partial image
- **Is**: first partial image
- **L**: light source
- **L1**: primary illumination light
- **L1s**: s polarized component
- **L1p**: p polarized component
- **L2**: secondary illumination light
- **L2s**: s polarized component
- **L2p**: p polarized component
- **L3**: tertiary illumination light, projection light
- **L3s**: s polarized component
- **L3p**: p polarized component
- **LP**: light pipe
- **LP'**: light pipe of prior art
- **LP1**: light pipe
- **LP2**: light pipe
- **LS1**: light source
- **LS2**: light source
- **M**: mirror
- **M1**: mirror
- **M2**: mirror
- **nj**: normal of display screen Sj, j = 1, ..., 5
- **O**: optical objective
- **O1**: optical objective
- **O2**: optical objective
- **S**: display screen
- **Sj**: display screen, j = 1, ..., 5

## Claims

1. Image generating and projecting arrangement, comprising:
- a light generating/receiving section (10) which is adapted and/or arranged in order to generate primary illumination light (L1) which comprises a first or s polarized primary illumination light component (L1s) and a second or p polarized primary illumination light component (L1p) of primary illumination light as light for a first and a second partial image (Is, Ip) of an image (I) to be generated, projected and to be displayed,
- an image generating section (20) which is adapted and/or arranged in order to receive said first or s polarized primary illumination light component (L1s) and said second or p polarized primary illumination light component (L1p) of said primary illumination light, in order to generate said first and said second partial images (Is, Ip) based on said first or s polarized primary illumination light component (L1s) and said second or p polarized primary illumination light component (L1p) of said primary illumination light (L1), respectively, and in order to provide a first or s polarized secondary illumination light component (L2s) and a second or p polarized secondary illumination light component (L2p) of secondary illumination light (L2) as light of said generated first and said second generated partial image (Is, Ip), respectively, and
- an optical projection section (30) which is adapted and/or arranged in order to receive said first or s polarized secondary illumination light component (L2s) and said second or p polarized secondary illumination light component (L2p) of said secondary illumination light (L2) as light of said first and said second partial image (Is, Ip), respectively, and in order to project the latter as said first and said second partial image (Is, Ip), respectively, to thereby generate and project said image (I) to be displayed,
- wherein said image generating section (20) comprises a first and a second independent image generating means (Ps, Pp) which are assigned to said first or s polarized polarization state and said second or p polarized polarization state, respectively, and which are adapted and/or arranged in order to independently from each other receive said first or s polarized primary illumination light component (L1s) and said second or p polarized primary illumination light component (L1p) of said primary illumination light (L1), in order to independently from each other generate said first and said second partial images (Is, Ip) based on said first or s polarized primary illumination light component (L1s) and said second or p polarized primary illumination light component (L1p) of said primary illumination light (L1), respectively, and in order to independently from each other provide said first or s polarized secondary illumination light component (L2s) and said second or p polarized secondary illumination light component (L2p) of said secondary illumination light (L2) as light of said generated first and said second generated partial image (Is, Ip), respectively, and
- wherein said optical projecting section (30) comprises a single and common optical objective (O) which is common for said first or s polarized polarization state and said second or p polarized polarization state, respectively, and which is adapted and/or arranged in order to commonly receive said first or s polarized secondary illumination light component (L2s) and said second or p polarized secondary illumination light component (L2p) of said secondary illumination light (L2) as light of said generated first and said second partial image (Is, Ip), respectively, and in order to project said first or s polarized secondary illumination light component (L2s) and said second or p polarized secondary illumination light component (L2p) of said secondary illumination light (L2) as light of said generated first and said second partial image (Is, Ip) as said first and said second partial image (Is, Ip), respectively, to thereby generate and project said image (I) to be displayed.

2. Image generating and projecting arrangement, comprising:
- a light generating/receiving section (10) which is adapted and/or arranged in order to generate primary illumination light (L1) which comprises a first or s polarized primary illumination light component (L1s) and a second or p polarized primary illumination light component (L1p) of primary illumination light as light for a first and a second partial image (Is, Ip) of an image (I) to be generated, projected and to be displayed,
- an image generating section (20) which is adapted and/or arranged in order to receive said first or s polarized primary illumination light component (L1s) and said second or p polarized primary illumination light component (L1p) of said primary illumination light and in order to generate said first and said second partial images (Is, Ip) based on said first or s polarized primary illumination light component (L1s) and said second or p polarized primary illumination light component (L1p) of said primary illumination light (L1), respectively, and in order to provide a first or s polarized secondary illumination light component (L2s) and a second or p polarized secondary illumination light component (L2p) of secondary illumination light (L2) as light of said first and said second generated partial image (Is, Ip), respectively, and
- an optical projection section (30) which is adapted and/or arranged in order to receive said first or s polarized secondary illumination light component (L2s) and said second or p polarized secondary illumination light component (L2p) of said secondary illumination light (L2) as light of said first and said second partial image (Is, Ip), respectively, and in order to project the latter as said first and said second partial image (Is, Ip), respectively, to thereby generate and project said image (I) to be displayed,
- wherein said image generating section (20) comprises a single or common image generating means (P) which is common for said first or s polarized polarization state and said second or p polarized polarization state and which is adapted and/or arranged in order to commonly receive said first or s polarized primary illumination light component (L1s) and said second or p polarized primary illumination light component (L1p) of said primary illumination light (L1), in order to commonly generate said first and said second partial images (Is, Ip) based on said first or s polarized primary illumination light component (L1s) and said second or p polarized primary illumination light component (L1p) of said primary illumination light (L1), respectively, and in order to commonly provide said first or s polarized secondary illumination light component (L2s) and said second or p polarized secondary illumination light component (L2p) of said secondary illumination light (L2) as light of said generated first and said second generated partial image (Is, Ip), respectively, and
- wherein said optical projecting section (30) comprises a first and a second independent optical objective (Os, Op) which are assigned to said first or s polarized polarization state and to said second or p polarized polarization state, respectively, and which are adapted and/or arranged in order to independently from each other receive said first or s polarized secondary illumination light component (L2s) and said second or p polarized secondary illumination light component (L2p) of said secondary illumination light (L2) as light of said first and said second partial image (Is, Ip), respectively, and in order to to independently from each other project the said first or s polarized secondary illumination light component (L2s) and said second or p polarized secondary illumination light component (L2p) of said secondary illumination light (L2) as light of said first and said second partial image (Is, Ip), respectively, as said first and said second partial image (Is, Ip), respectively, to thereby generate and project said image (I) to be displayed.

3. Image generating and projecting arrangement, comprising:
- a light generating/receiving section (10) which is adapted and/or arranged in order to generate primary illumination light (L1) which comprises a first or s polarized primary illumination light component (L1s) and a second or p polarized primary illumination light component (L1p) of primary illumination light as light for a first and a second partial image (Is, Ip) of an image (I) to be generated, projected and to be displayed,
- an image generating section (20) which is adapted and/or arranged in order to receive said first or s polarized primary illumination light component (L1s) and said second or p polarized primary illumination light component (L1p) of said primary illumination light and in order to generate said first and said second partial images (Is, Ip) based on said first or s polarized primary illumination light component (L1s) and said second or p polarized primary illumination light component (L1p) of said primary illumination light (L1), respectively, and in order to provide a first or s polarized secondary illumination light component (L2s) and a second or p polarized secondary illumination light component (L2p) of secondary illumination light (L2) as light of said first and said second generated partial image (Is, Ip), respectively, and
- an optical projection section (30) which is adapted and/or arranged in order to receive said first or s polarized secondary illumination light component (L2s) and said second or p polarized secondary illumination light component (L2p) of said secondary illumination light (L2) as light of said first and said second partial image (Is, Ip), respectively, and in order to project the latter as said first and said second partial image (Is, Ip), respectively, to thereby generate and project said image (I) to be displayed,
- wherein said image generating section (20) comprises a first and a second independent image generating means (Ps, Pp) which are assigned to said first or s polarized polarization state and said second or p polarized polarization state, respectively, and which are adapted and/or arranged in order to independently from each other receive said first or s polarized primary illumination light component (L1s) and said second or p polarized primary illumination light component (L1p) of said primary illumination light (L1), respectively, in order to generate said first and said second partial images (Is, Ip) based on said first or s polarized primary illumination light component (L1s) and said second or p polarized primary illumination light component (L1p) of said primary illumination light (L1), respectively, and in order to independently from each other provide said first or s polarized secondary illumination light component (L2s) and said second or p polarized secondary illumination light component (L2p) of said secondary illumination light (L2) as light of said generated first and said second generated partial image (Is, Ip), respectively, and
- wherein said optical projecting section (30) comprises a first and a second independent optical objective (Os, Op) which are assigned to said first or s polarized polarization state and to said second or p polarized polarization state, respectively, and which are adapted and/or arranged in order to independently from each other receive said first or s polarized secondary illumination light component (L2s) and said second or p polarized secondary illumination light component (L2p) of said secondary illumination light (L2) as light of said first and said second partial image (Is, Ip), respectively, and in order to independently from each other project said first or s polarized secondary illumination light component (L2s) and said second or p polarized secondary illumination light component (L2p) of said secondary illumination light (L2) as light of said first and said second partial image (Is, Ip), respectively, as said first and said second partial image (Is, Ip), respectively, to thereby generate and project said image (I) to be displayed.

4. Arrangement according to any one of the preceding claims,
wherein said light generating/receiving section (10) comprises independent first and second light generating/receiving means (Ls, Lp) which are assigned to said first or s polarized polarization state and said second or p polarized polarization state and which are adapted and/or arranged in order to independently from each other generate/receive said first or s polarized primary illumination light component (L1s) and said second or p polarized primary illumination light component (L1p) of said primary illumination light, respectively.

5. Image generating and projection arrangement according to any one of the preceding claims 1 to 3, wherein said light generating/receiving section (10) comprises a common light generating/receiving means (L) which is adapted and/or arranged in order to commonly generate/receive said first or s polarized primary illumination light component (L1s) and said second or p polarized primary illumination light component (L1p) of said primary illumination light (L1).

6. Arrangement according to any one of the preceding claims,
wherein a display section (40) is provided which is adapted and/or arranged in order to receive said secondary illumination light (L2) or a derivative (L3) thereof as light of said first and second partial images (Is, Ip) and in particular as light of said image (I) and to display said image (I).

7. Arrangement according to claim 6,
wherein said display section (40) comprises a plurality of display screens (S1, ..., S5) which are adapted and/or arranged in order to receive said secondary illumination light (L2) or a derivative (L3) thereof as light of said first and second partial images (Is, Ip) and in particular as light of said image (I) and to display said image (I) or a part thereof.

8. Image generating and projecting arrangement, comprising:
- a light generating/receiving section (10) which is adapted and/or arranged in order to generate and/or receive primary illumination light (L1) as light for an image (I) to be generated, projected, and to be displayed,
- an image generating section (20) which is adapted and/or arranged in order to receive said primary illumination light (L1) as light for said image (I) to be generated, to generate said image (I) and to provide secondary illumination light (L2) as light of said generated image (I),
- an optical projection section (30) which is adapted and/or arranged in order to receive said secondary illumination light (L2) as light of said generated image (I) and to project said secondary illumination light (L2) as tertiary illumination light (L3) and thereby projecting said image (I) and
- a display section (40) which is adapted and/or arranged in order to received said tertiary illumination light (L3) as light of said projected image (I) and to display said image (I),
- wherein said display section (40) comprises a plurality of display screens (S1, ..., S5) which are adapted and/or arranged in order to received said tertiary illumination light (L3) as light of said projected image (I) and to display said image (I) or a respective part thereof.

9. Arrangement according to any one of the preceding claims 6 to 8,
wherein planar display screens (S1, ..., S5) are provided.

10. Arrangement according to any one of the preceding claims 6 to 9,
wherein two display screens (S1, S2) are provided.

11. Arrangement according to any one of the preceding claims 6 to 10,
wherein said two display screens (S1, S2) are arranged in a back-to-back relationship and/or with an angle of about 180° between them, in particular with respect to their respective normal (n1, n2).

12. Arrangement according to any one of the preceding claims 6 to 11,
wherein the display screens (S1, ..., S5) are arranged in order to form a concave arrangement of display screens.

13. Arrangement according to any one of the preceding claims 6 to 12,
wherein the display screens (S1, ..., S5) are arranged with their normals (n1, ..., n5) essentially lying in a common plane.

14. Arrangement according to any one of the preceding claims 6 to 13,
wherein a common projection is assigned to and displayed on the plurality of said display screens (S1, ..., S5).

15. Arrangement according to any one of the preceding claims 6 to 14,
wherein a plurality of projections is assigned to and displayed on said plurality of said display screens (S1, ..., S5).

16. Arrangement according to any one of the preceding claims 6 to 15,
wherein to each projection screen (S1, ..., S5) a distinct projection is assigned to and projected on, in particular in a one-to-one relationship.

17. Arrangement according to any one of the preceding claims,
wherein one sensor means (B) or a plurality of sensor means (B) is provided which is adapted and/or arranged in order to sense at least one physical, chemical and/or biological entity or property of the environment and in particular of a user, derivatives thereof and/or data in connection therewith as measurement data.

18. Image generating and projecting arrangement, comprising:
- a light generating/receiving section (10) which is adapted and/or arranged in order to generate and/or receive primary illumination light (L1) as light for an image (I) to be generated, projected, and to be displayed,
- an image generating section (20) which is adapted and/or arranged in order to receive said primary illumination light (L1) as light for said image (I) to be generated, to generate said image (I) and to provide secondary illumination light (L2) as light of said generated image (I),
- an optical projection section (30) which is adapted and/or arranged in order to receive said secondary illumination light (L2) as light of said generated image (I) and to project said secondary illumination light (L2) as tertiary illumination light (L3) and thereby projecting said image (I) and
- a display section (40) which is adapted and/or arranged in order to received said tertiary illumination light (L3) as light of said projected image (I) and to display said image (I),
- wherein one sensor means (B) or a plurality of sensor means (B) is provided which is adapted and/or arranged in order to sense at least one physical, chemical and/or biological entity or property of the environment and in particular of a user, derivatives thereof and/or data in connection therewith as measurement data.

19. Arrangement according to any one of the preceding claims 17 or 18,
wherein one of the group consisting of physical sensors, chemical sensors, bio-sensors, cameras, microphones, and the like is used as a sensor means (B).

20. Arrangement according to any one of the preceding claims 17 to 19,
which is adapted and/or arranged in order to display said measurement data or derivatives thereof.

21. Arrangement according to any one of the preceding claims,
which is, is a part of or comprises a see-through display device.

22. Arrangement according to any one of the preceding claims,
which is, is a part of or comprises a near-to-face display device.

23. Arrangement according to any one of the preceding claims,
which is, is a part of or comprises a personalized or personal augmented bio-sensing display device.
